Europäisches Patentamt

European Patent Office

Office européen des brevets

(11) Veröffentlichungsnummer: **0 437 822 A2**

# EUROPÄISCHE PATENTANMELDUNG

(21) Anmeldenummer: **90125308.8**

(22) Anmeldetag: **21.12.90**

(51) Int. Cl.⁵: **G01S 5/10**

(30) Priorität: **19.01.90 DE 4001497**

(43) Veröffentlichungstag der Anmeldung:
**24.07.91 Patentblatt 91/30**

(84) Benannte Vertragsstaaten:
**DE ES FR GB IT SE**

(71) Anmelder: **Bayerische Motoren Werke Aktiengesellschaft**
**Patentabteilung AJ-3 Postfach 40 02 40**
**Petuelring 130**
**W-8000 München 40(DE)**

(72) Erfinder: **Wiesmeier, Christian**
**Auerfeldstrasse 4a**
**W-8000 München 90(DE)**
Erfinder: **Obert, Georg**
**Klopstockstrasse 8**
**W-8000 München 40(DE)**

(54) **Verfahren zum funkempfangsseitigen Bestimmen der Ortsveränderung eines Kraftfahrzeugs und Funkempfangseinrichtung eines Kraftfahrzeugs.**

(57) Verfahren zum funkempfangsseitigen Bestimmen der Ortsveränderung eines Kraftfahrzeugs und Funkempfangseinrichtung eines Kraftfahrzeugs, wobei die Funkempfangseinrichtung des Kraftfahrzeugs eine Folge äquidistanter Funksignale von einem stationären Funksender empfängt. Um die aufwendige Infrastruktur solcher Systeme besser auszunutzen, soll eine Funkempfangseinrichtung bereitgestellt werden, die ohne Eingriffe in die Infrastruktur weitere Funktionen erfüllen kann. Dazu wird vorgeschlagen, daß die Funkempfangseinrichtung unter Starten einer Zeitmessung von einem ersten Betriebsort an einen zweiten Betriebsort bewegt wird und die Differenz der Funksignal-Laufzeiten von dem Funksender zu den beiden Betriebsorten gemessen wird. Die Laufzeitendifferenz-Messung ermöglicht der Funkempfangseinrichtung eine Aussage über ihre Ortsveränderung. Mehrere derartige Messungen erlauben ihr eine Bestimmung der Koordinaten der Betriebsorte und damit ihres Standorts. Ein bevorzugtes Einsatzgebiet sind automobile Funktelefone insbesondere im digitalen D-Netz.

EP 0 437 822 A2

# VERFAHREN ZUM FUNKEMPFANGSSEITIGEN BESTIMMEN DER ORTSVERÄNDERUNG EINES KRAFTFAHRZEUGS UND FUNKEMPFANGSEINRICHTUNG EINES KRAFTFAHRZEUGS

Die Erfindung bezieht sich auf Verfahren zum fukempfangsseitigen Bestimmen der Ortsveränderung eines Kraftfahrzeugs, wobei eine Funkempfangseinrichtung des Kraftfahrzeugs eine Folge von Funksignalen empfängt, die mit gleichbleibendem zeitlichen Abstand von einem ersten stationären Funksender ausgesendet werden. Ferner bezieht sich die Erfindung auf eine Funkempfangseinrichtung eines Kraftfahrzeugs, die zum Empfang einer derartigen Folge äquidistanter Funksignale eingerichtet ist.

Solche Verfahren und Einrichtungen sind z.B. im Zusammenhang mit in Kraftfahrzeugen montierten Funktelefonen bekannt. Die vorliegende Erfindung setzt jedoch keineswegs die Möglichkeit einer Zweiwege-Kommunikation voraus, sondern erstreckt sich auch auf solche Fälle, in denen eine Funkempfangseinrichtung zwar mobil ist, aber nur als Empfänger und nicht auch als Sender betrieben werden kann, wie etwa ein Autoradio oder ein sonstiges in einem Kraftfahrzeug betriebenes Empfangsgerät, das eine Folge äquidistanter Funksignale empfangen und verarbeiten kann.

Diese Verfahren und Einrichtungen, ihre zugehörige flächendeckende Sender-Infrastruktur und die Standardisierung und Organisation der Datenübertragung sind vergleichsweise aufwendig, so daß es aus technischen und wirtschaftlichen Gründen erstrebenswert ist, sie so umfassend wie möglich nutzbar zu machen.

Die Erfindung löst die Aufgabe, gattungsgemäße Verfahren und Einrichtungen so weiterzuentwickeln, daß sie zur Erfüllung neuer, zusätzlicher Funktionen im Zusammenwirken mit einer gegebenen Infrastruktur, z.B. dem europaweit konzipierten digitalen D-Netz für die automobile Funktelefon-Kommunikation, dienen können, ohne einen Eingriff in das Infrastrukturkonzept zu bedingen.

Hinsichtlich des Verfahrens der eingangs erwähnten Art wird diese Aufgabe erfindungsgemäß durch Hinzunahme der Merkmale gelöst, daß an einem ersten Betriebsort der Funkempfangseinrichtung eine Zeitmessung gestartet wird und nach Bewegen der Funkempfangseinrichtung an einen zweiten Betriebsort die Differenz der von einem Funksignal für den Weg vom Funksender zum ersten und zweiten Betriebsort benötigten Laufzeiten ermittelt wird. Hinsichtlich der Funkempfangseinrichtung der eingangs genannten Art wird die genannte Aufgabe erfindungsgemäß gelöst durch Hinzunahme einer Einrichtung zum Starten einer Zeitmessung an einem ersten Betriebsort der Funkempfangseinrichtung und zum Ermitteln der Differenz der von einem Funksignal für den Weg vom Funksender zum ersten und einem zweiten Betriebsort benötigten Laufzeiten nach Bewegen der Funkempfangseinrichtung an den zweiten Betriebsort.

Der Vorteil der Erfindung besteht darin, daß ohne Eingriff in das Sendersystem oder Übertragungskonzept eine weitere nützliche Funktion für diese bereitgestellt wird, nämlich eine Gewinnung von Daten über eine Ortsveränderung der Funkempfangseinrichtung mit dieser selbst. Aus der erfindungsgemäß ermittelten Laufzeitendifferenz läßt sich nämlich eine Änderung des Abstands der Funkempfangseinrichtung gegenüber dem Funksender bestimmen, da die Ausbreitungsgeschwindigkeit eines Funksignals bekanntlich gleich der Lichtgeschwindigkeit in demselben Medium ist.

Vorteilhafte Verfahren und Funkempfangseinrichtungen zum Messen der Laufzeitendifferenz sind Gegenstand des Anspruchs 2 bzw. 16.

Werden gemäß Anspruch 4 bzw. 19 weitere Referenzdaten gewonnen, gestatten diese, zusammen mit der bezüglich des ersten Funksenders ermittelten Laufzeit- oder Abstandsdifferenz, vorteilhafterweise eine Bestimmung der Koordinaten des ersten Betriebsorts und/oder der Koordinaten des zweiten Betriebsorts.

Damit wird eine automatische Ortung der Funkempfangseinrichtung ermöglicht, d.h. die Funkempfangseinrichtung kann ihre eigene Position innerhalb eines Koordinatensystems ermitteln. Hierzu können der Funkempfangseinrichtung die Koordinaten der relevanten Funksender eingespeichert sein, so daß er aus der Kennung eines Senders die zugehörigen Sender-Koordinaten aus einer eigenen Tabelle abrufen kann. Eine alternative Variante bestünde darin, daß ein Funksender als Kennung gerade seine Koordinaten aussendet.

Die Möglichkeit einer Feststellung der eigenen Position kann z.B. für ein modernes Fahrzeugflotten-Management von Bedeutung sein, oder für einen automatischen Notruf mit automatischer Ortsangabe, beispielsweise für einen verdeckten Taxifahrernotruf, oder für eine automatische Diebstahlsmeldung mit Ortsangabe, oder als Orientierungshilfe für einen Fahrer, der dann etwa im Ausland eine Positionierung des eigenen Standortes vornehmen kann etc.

Gemäß Anspruch 5 bzw. 20 können die weiteren für eine Positionsbestimmung benötigten Referenzdaten z.B. dadurch gewonnen werden, daß Laufzeitendifferenzen zwischen zwei Betriebsorten bezüglich dreier weiterer Funksender (d.h. insgesamt vier Funksendern) ermittelt werden. Messungen etwa an einer Fahrstrecke brauchen damit vorteilhafterweise nicht durchgeführt zu werden.

Werden - gemäß Anspruch 6 bzw. 21 - Messungen von Laufzeiten-Differenzen zwischen drei (anstatt zwei) Betriebsorten durchgeführt, genügt eine Auswertung von nur zwei weiteren (d.h. insgesamt drei) Funksendern, und zwar wiederum ohne eine Notwendigkeit von Messungen etwa an einer Fahrstrecke.

Gemäß Anspruch 7 bzw. 22 genügt eine Auswertung von nur zwei weiteren (d.h. insgesamt drei) Funksendern auch bei Zugrundelegung von nur zwei Betriebsorten, wenn man Messungen an der Strecke zwischen den Betriebsorten durchführt, um den Abstand zwischen den Betriebsorten zu ermitteln.

Ermittelt man zusätzlich noch die Absolutrichtung der Verbindungslinie zwischen zwei Betriebsorten, genügt gemäß Anspruch 8 bzw. 23 sogar die Auswertung nur eines weiteren Funksenders (d.h. insgesamt zweier Funksender).

Gemäß den Ansprüchen 9/10 bzw. 24/25 kann, wenn die Funkempfangseinrichtung in Verbindung mit einem Fahrzeug gebraucht wird, der Abstand zwischen zwei Betriebsorten mittels vom Fahrzeug selbst gelieferter Daten ermittelt werden. Dieses Ortungssystem empfiehlt sich hauptsächlich für Überlandfahrten (Autobahnen, Landstraßen), bei denen die Fahrtstrecke üblicherweise geringeren Richtungsänderungen unterliegt, wodurch Ungenauigkeiten bei der Streckenermittlung infolge veränderlicher Reifendurchmesser und/oder schwerer zu erfassender Kurvenfahrten minimiert werden.

Die Absolutrichtung der Verbindungslinie zwischen zwei Betriebsorten kann gemäß Anspruch 11 bzw. 26 beispielsweise mittels eines Kompasses im Zusammenhang mit der Vektorenaddition ermittelt werden.

Gemäß Anspruch 12 bzw. 27 wird der Abstand zwischen zwei Betriebsorten so gewählt, daß er im Interesse der Meßgenauigkeit und Auswertungsstabilität weder in einer zu kleinen noch in einer zu großen Relation zu dem zwischen den stationären Funksendern vorliegenden Abstand steht. Der Abstand zwischen zwei Betriebsorten - die geradlinige Wegstrecke zwischen ihnen - sollte im Bereich von einigen Kilometern liegen (2...5 km), da sie in vernünftiger Relation zu den Entfernungen benachbarter Funksender stehen sollte, die in freiem Gelände um 50 km betragen können.

Ein zuverlässiges Ortungsergebnis liegt erst nach Erreichen eines gewissen Mindestabstandes des zweiten Betriebsorts vom ersten Betriebsort vor. Startet jedoch gemäß Anspruch 13 bzw. 28 die Funkempfangseinrichtung bei ihrer Bewegung von einem Betriebsort zu einem nächsten Betriebsort bereits nach Zurücklegen einer Teilstrecke eine weitere Zeitmessung oder bei Zurücklegen mehrerer Teilstrecken sukzessive jeweils eine weitere Zeitmessung, so können - nachdem der Mindestabstand einmal durchlaufen ist - weitere zuverlässige Ortungen jeweils bereits im Teilstreckenabstand (z.B. alle 500 m) geleistet werden. Mit Hilfe geeigneter Methoden (Plausibilitäts- oder Trackingverfahren, Mittelungen, Calmanfilter) können die nacheinander berechneten Positionen verglichen und erforderlichenfalls korrigiert werden.

Die Möglichkeit gemäß Anspruch 14 bzw. 29, daß die Funkempfangseinrichtung äquidistante Taktsignale eines digital übertragenen Funksignals auswertet, ist von Bedeutung insbesondere im Hinblick auf taktgesteuert gesendete Rufsignale oder Organisationssignale von Funksendern für eine digitale Funktelefon-Kommunikation, wie sie ab 1992 für automobile Anwendung in Europa eingeführt wird (Stichworte GSM-System [Groupe Spécial Mobile], D-Netz). Solche, Datenrahmen begrenzende Taktsignale haben z.B. die Form bestimmter Bitkombinationen.

Gemäß Anspruch 15 bzw. 30 können zwischen sequentiellen Zeitmarken (wiederkehrenden Impulsfolgen eines bestimmten Kanals) plötzlich auftretende Zeitsprünge, wenn sie groß genug sind, detektiert, auf Funkfeldanomalien (Beugung, Reflexion etc.) zurückgeführt und evtl. in Verbindung mit parallel auftretenden Feldstärkeänderungen in die Standortberechnung kompensierend eingeführt werden.

Anhand von in der Zeichnung dargestellten Ausführungsbeispielen wird die Erfindung nachstehend näher erläutert. Es zeigt

Fig.1 ein Diagramm zur Veranschaulichung einer Messung einer Laufzeitendifferenz;

Fig.2 ein exemplarisches Koordinatensystem, in dem die Position einer Funkempfangseinrichtung unter Bezug auf vier Funksender und zwei Meßpunkte (Betriebsorte) bestimmt wird;

Fig.3 ein Schema zur Bestimmung der Position einer Funkempfangseinrichtung unter Bezugnahme auf drei Funksender und drei Meßpunkte (Betriebsorte);

Fig.4 ein Schema zur Bestimmung der Position einer Funkempfangseinrichtung unter Bezugnahme auf drei Funksender, zwei Meßpunkte (Betriebsorte) und den Abstand zwischen den Meßpunkten oder unter Bezugnahme auf zwei Funksender, zwei Meßpunkte (Betriebsorte), den Abstand zwischen den Meßpunkten und die Absolutrichtung der Verbindungslinie zwischen den Meßpunkten;

Fig.5 ein Flußdiagramm zur Bestimmung der Position einer Funkempfangseinrichtung unter Bezugnahme auf drei Funksender, zwei Meßpunkte (Betriebsorte) und den Abstand zwischen den Meßpunkten; und

Fig.6 eine Verdeutlichung einer Methode, bei der bereits zwischen Anfangspunkt und Endpunkt einer Meßstrecke sukzessive neue Messungen in Gang gesetzt werden.

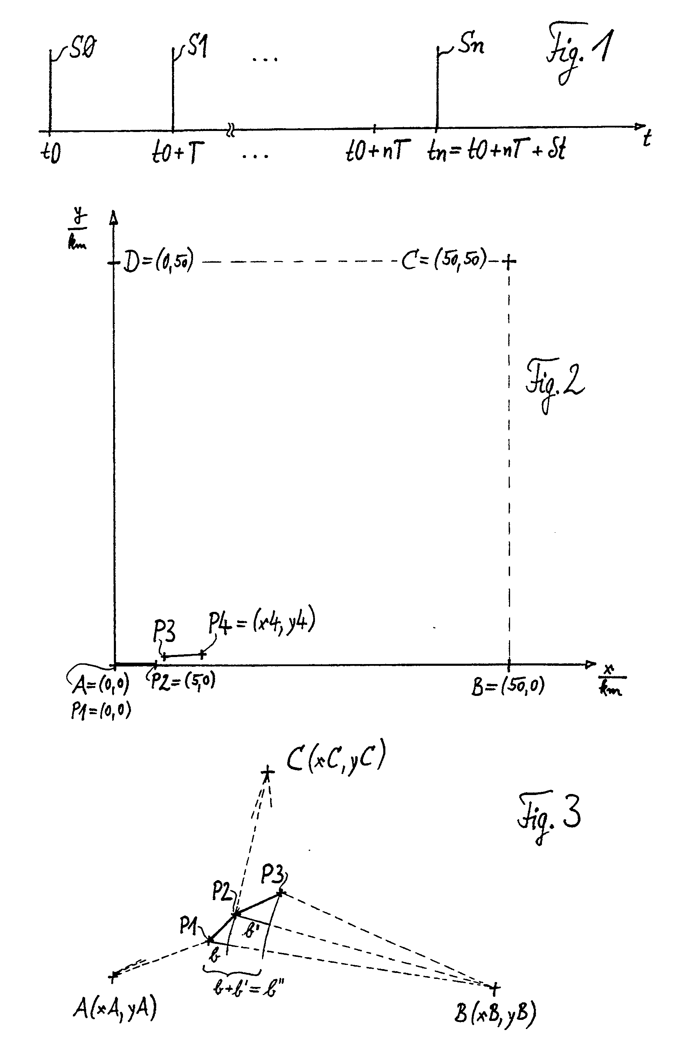

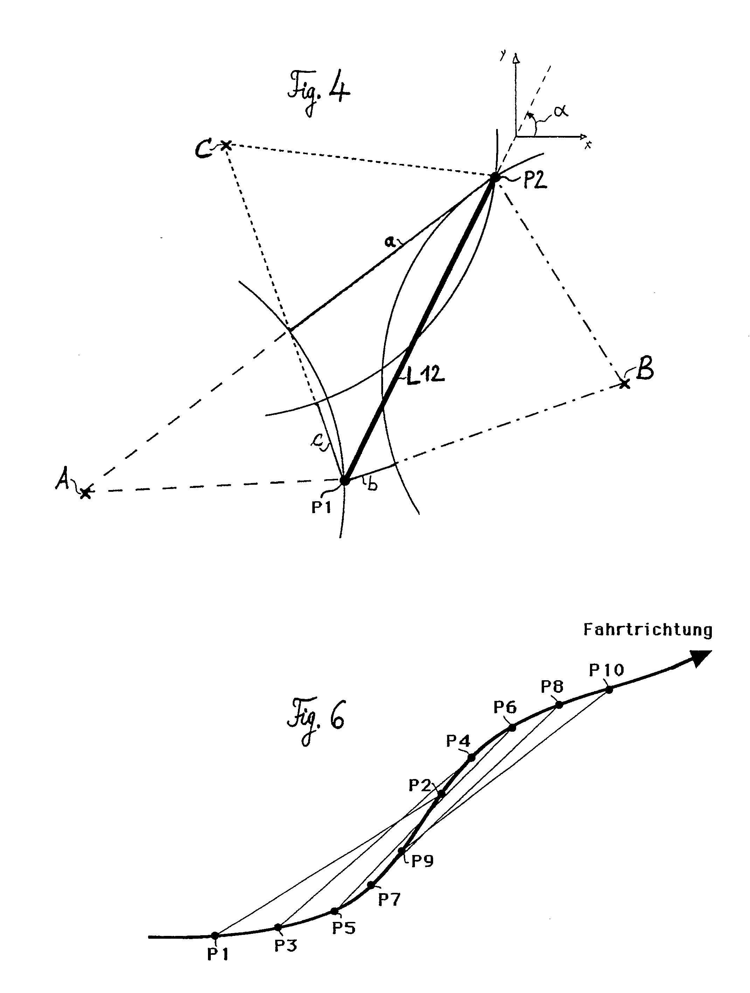

Fig.1 veranschaulicht eine Messung einer Laufzeitendifferenz, die unter folgenden Umständen auftritt: eine Funkempfangseinrichtung eines Kraftfahrzeugs empfängt zunächst, zum Zeitpunkt to, an einem ersten Betriebsort oder Meßpunkt (z.B. P1 gemäß Fig. 2, 3, 4 oder 6) ein 'nulltes' Funksignal S0 aus einer äquidistanten Folge von Funksignalen, die mit gleichbleibendem zeitlichen Abstand T von einem stationären Funksender (z.B. A gemäß Fig. 2, 3 oder 4) ausgesendet werden. Dann bewegt sich die Funkempfangseinrichtung und erreicht nach n Perioden des Funksignals, d.h. nach einer Zeitdauer nT, zum Zeitpunkt tn = to + nT einen zweiten Betriebsort oder Meßpunkt (z.B. P2 gemäß Fig. 2, 3, 4 oder 6). Liegt der zweite Betriebsort P2 weiter vom Funksender A entfernt als der erste Betriebsort P1, trifft das n-te vom Funksender A ausgesendete Funksignal Sn nicht zum Zeitpunkt to + nT am zweiten Betriebsort ein, sondern erst zum Zeitpunkt to + nT + $\delta t$ (mit $\delta t$ > 0). Liegt umgekehrt der zweite Betriebsort P2 näher am Funksender A als der erste Betriebsort P1, trifft das n-te vom Funksender A ausgesendete Funksignal Sn bereits zu einem Zeitpunkt to + nT + $\delta t$ (mit $\delta t$ < 0) am zweiten Betriebsort ein. Z.B. bei einem Entfernungsunterschied a = 3 km zum Funksender A beträgt die Laufzeitendifferenz $\delta t$ circa 10 $\mu$sec und kann beispielsweise durch Vergleich mit einer quarzstabilisierten Zeitbasis eines 10MHz-Taktgenerators (Taktperiode = 0,1 $\mu$sec) mit der dieser Zeitbasis inhärenten Genauigkeit gemessen werden.

Die Messung wird im Beispiel der Fig.1 zum Zeitpunkt to am ersten Betriebsort P1 gestartet. Die während der Bewegung der Funkempfangseinrichtung eintreffenden Funksignale S0, S1,... werden gezählt. Bei Empfang eines n-ten Funksignals Sn am zweiten Betriebsort P2 wird der Zeitpunkt tn des Eintreffens dieses Funksignals gemessen. Die zwischen den Zeitpunkten to und tn verstrichene Zeit, also die Zeitspanne (tn - to), wird dann verglichen mit der Zeitdauer nT, die bis zum Eintreffen des n-ten Funksignals Sn am zweiten Betriebsort P2 vergangen wäre, wenn dessen Entfernung vom Funksender A die gleiche wäre wie die Entfernung des ersten Betriebsorts P1 vom Funksender A. Ein Unterschied $\delta t$ = [(tn - to) - nT] stellt eine Laufzeitendifferenz dar, die ihrerseits über die bekannte Ausbreitungsgeschwindigkeit elektromagnetischer Wellen (z.B. in Luft ca. 300.000 km/sec) in eine räumliche Entfernungsdifferenz a bezüglich des Funksenders A umrechenbar ist.

Die Laufzeitendifferenz $\delta t$ kann unter Umständen nur so genau gemessen werden, wie die zwischen den Zeitpunkten to und tn verstrichene Zeit, also die Zeitspanne (tn - to), gemessen werden kann. Dieser Zeitspanne - d.h. somit auch der Strecke zwischen den Betriebsorten P1 und P2 - und der Anzahl n ist daher aufgrund der im Vergleich zu einer Atomuhr weniger stabilen Zeitmessung des Funkempfängers eine obere Schranke gesetzt.

Andererseits sollten die Abstände zwischen den Betriebsorten P1, P2 auch nicht zu klein gewählt werden, sondern - wenn Funksignale mehrerer Funksender A, B,... ausgewertet werden - in vernünftiger Relation zu den Abständen dieser Funksender A, B,... stehen. In freiem Gelände können diese z.B. 50 km weit auseinanderstehen. Die Abstände zwischen den Betriebsorten P1, P2 sollten in einem solchen Fall vorzugsweise etwa 2 bis 5 km betragen.

Werden äquidistante Funksignale mehrerer Funksender A, B, C,... ausgewertet, ist es keineswegs erforderlich, daß der zeitliche Abstand TA zwischen aufeinanderfolgenden Funksignalen des Funksenders A gleich ist dem zeitlichen Abstand TB zwischen aufeinanderfolgenden Funksignalen des Funksenders B usw., solange diese zeitlichen Abstände TA, TB, TC,... nur konstant sind und eindeutig zugeordnet werden können. Messen kann sie die Funkempfangseinrichtung sogar selbst, wenn sie ihr nicht anderweitig bekannt sein sollten.

Im praktischen Beispielfall des GSM-Systems (D-Netz) für automobile Funktelefone werden alle von einem Funksender (BTS = Base Transceiver Station, Feststation) gesendeten Zeitrahmen (TDMA-frames [Time Division Multiplex Access]) durch Zähler getaktet, die kontinuierlich laufen, unabhängig davon, ob gesendet wird oder nicht. Die Funkfeststationen werden entweder von einem zentralen Zeitnormal (Cäsiumnormal) über PCM-30 Strecken synchronisiert, oder sie verfügen über eigene Oszillatoren.

Obwohl prinzipiell alle Kanäle der Abwärtsstrecke (Funksender/Feststation/BTS sendet zur Mobilstation) für die Zeitmessung in Frage kommen, bieten sich einige davon besonders an.

Für die Zeitdifferenzmessung kann der BCCH-Carrier herangezogen werden. Auf dieser Frequenz werden die abgesetzten Impulsfolgen (Bursts) kontinuierlich und mit gleichbleibender Intensität von der BTS abgestrahlt (GSM rec. 05.08.). Zudem werden der Mobilstation über die zeitverschachtelten Control Channels alle notwendigen Informationen geliefert. So sendet der BCCH (Broadcast Control Channel) Informationen über die Nachbar-BTS und der SCH (Synchronization Channel) teilt der Mobilstation die jeweilige TDMA-Nummer mit (RFN: Reduced Frame Number). Somit muß nur zu Anfang und Ende der Fahrstrecke eine Funkverbindung zu den drei Funkfeststationen bestehen.

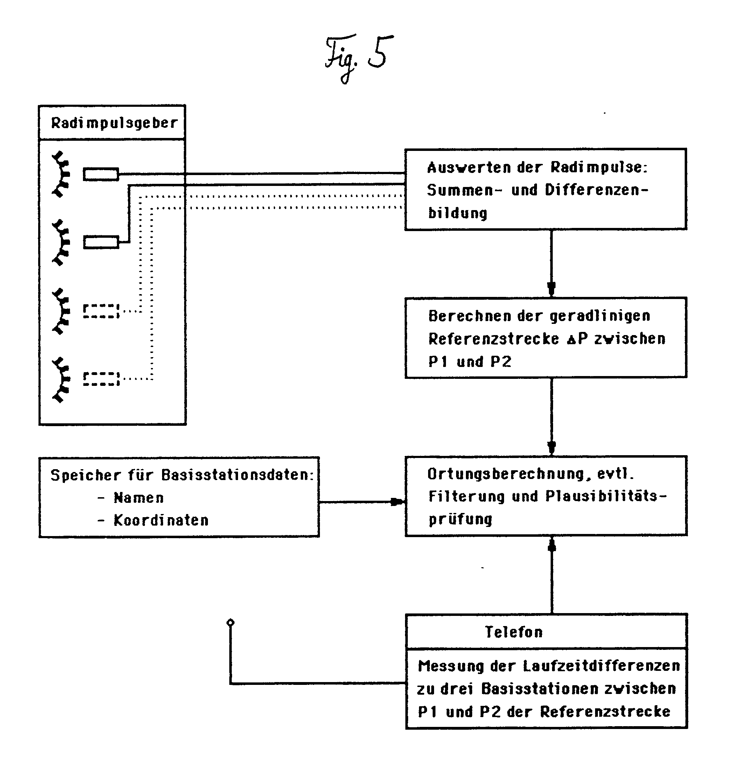

Jedenfalls stehen äquidistante Folgen von gesendeten Funksignalen S0, S1,..., Sn,... zur Verfügung, wie sie zu einer Messung einer Laufzeitendifferenz $\delta t$ auswertbar sind. Werden mehrere Laufzeitendifferenzen $\delta tA$, $\delta tB$, $\delta tC$,... bezüglich mehrerer, hinsichtlich ihrer Koordinaten bekannter Funksender A, B, C,... ausgewertet, kann eine entsprechend eingerichtete Funkempfangseinrichtung aus den zugehörigen Abstandsdifferenzen a, b, c,... (vgl. Fig.4) die Koordinaten ihrer eigenen Position ermitteln. Referenzdaten über eine oder

4

mehrere zurückgelegte Fahrstrecken können hinzugezogen werden, um eine Positionsermittlung zu erleichtern oder zu ermöglichen, wenn nicht genügend viele Funksender empfangen werden können oder sollen.

Die Funkempfangseinrichtung kann ein einheitliches Funkempfangsgerät sein oder aus mehreren im Kraftfahrzeug getrennt, z. B. in einem Zusatzgerät, angeordneten Komponenten bestehen. Auch können im Kraftfahrzeug bereits vorhandene Komponenten erfindungsgemäß genutzt werden, beispielsweise ein Bordrechner entsprechender Kapazität.

Fig.2 zeigt ein exemplarisches, kilometriertes Koordinatensystem (x, y), in dem die Position einer Funkempfangseinrichtung unter Bezug auf vier stationäre Funksender A, B, C, D und zwei Meßpunkte (Betriebsorte) P1, P2 bestimmt wird. Der Funksender A hat darin der Einfachheit halber die Koordinaten (xA = 0, yA = 0), der Funksender B die Koordinaten (xB = 50, yB = 0), der Funksender C die Koordinaten (xC = 50, yC = 50) und der Funksender D die Koordinaten (xD = 0, yD = 50). Der Funkempfangseinrichtung sind diese Funksender-Koordinaten bekannt, sei es, daß sie in ihm gespeichert vorliegen, sei es, daß sie von den Funksendern selbst ausgestrahlt werden.

Der Funkempfänger bewege sich nun - unter Starten einer Zeitmessung - von dem Betriebsort P1 zu dem Betriebsort P2; deren Koordinaten (x1, y1) bzw. (x2, y2) sind zunächst nicht bekannt. Die Bewegungsroute braucht keineswegs geradlinig zu sein. Am Betriebsort P2 angelangt, ermittelt die Funkempfangseinrichtung in der oben beschriebenen Weise bezüglich jedes Funksenders A, B, C, D jeweils die Differenz der Funksignal-Laufzeiten zu den Betriebsorten P1 und P2. Aus diesen vier Laufzeiten-Differenzen ergeben sich vier räumliche Abstands-Differenzen a, b, c, d der Betriebsorte P1, P2 bezüglich der Funksender A, B, C, D.

Aus geometrischen Gründen gelten für die vier Abstands-Differenzen a, b, c, d folgende Beziehungen:

$$a = \sqrt{(x2 - xA)^2 + (y2 - yA)^2} - \sqrt{(x1 - xA)^2 + (y1 - yA)^2}$$

$$b = \sqrt{(x2 - xB)^2 + (y2 - yB)^2} - \sqrt{(x1 - xB)^2 + (y1 - yB)^2}$$

$$c = \sqrt{(x2 - xC)^2 + (y2 - yC)^2} - \sqrt{(x1 - xC)^2 + (y1 - yC)^2}$$

$$d = \sqrt{(x2 - xD)^2 + (y2 - yD)^2} - \sqrt{(x1 - xD)^2 + (y1 - yD)^2}$$

Aus diesen vier Gleichungen lassen sich die vier Unbekannten x1, y1; x2, y2 bestimmen. Ermittelt die Funkempfangseinrichtung nach der Bewegung vom Betriebsort P1 zum Betriebsort P2 z.B. die Abstandsdifferenzwerte [in km]

a = +5,00000; b = -5,00000; c = -3,44255; d = +0,24938;

dann errechnen sich für die Betriebsorte P1, P2 die Koordinaten [in km]

x1 = 0, y1 = 0 und x2 = +5, y2 = 0.

Ermittelt die Funkempfangseinrichtung nach der Bewegung von einem Betriebsort P3 zu einem Betriebsort P4 z.B. die Abstandsdifferenzwerte [in km]

a = +5,00000 b = -5,00000 c = -3,44255 d = +0,91512,

dann errechnen sich für die Betriebsorte P3, P4 die Koordinaten [in km]

x3 = +6,08144; y3 = +1,00000 und x4 = +11,09075 ; y4 = +1,26900.

Fig.3 zeigt ein Schema zur Bestimmung der Position einer Funkempfangseinrichtung unter Bezugnahme auf drei Funksender A, B, C und drei Meßpunkte (Betriebsorte) P1, P2, P3. Die Funksender A, B, C haben die bekannten Koordinaten (xA, yA), (xB, yB) bzw. (xC, yC), und die Betriebsorte P1, P2, P3 haben die zu ermittelnden Koordinaten (x1, y1), (x2, y2) bzw. (x3, y3).

Zunächst wird die Funkempfangseinrichtung vom Betriebsort P1 zum Betriebsort P2 bewegt und dabei werden auf die beschriebene Weise drei Entfernungsdifferenzen a, b, c bezüglich der drei Funksender A, B, C ermittelt. Aus Übersichtlichkeitsgründen ist in Fig.3 exemplarisch nur die Entfernungsdifferenz b dargestellt.

Dann wird die Funkempfangseinrichtung vom Betriebsort P2 zum Betriebsort P3 bewegt und hierbei werden nun deren drei Entfernungsdifferenzen a', b', c' bezüglich der drei Funksender A, B, C ermittelt. Wiederum ist aus Übersichtlichkeitsgründen exemplarisch nur die Entfernungsdifferenz b' dargestellt.

Für jede der sechs ermittelten Entfernungsdifferenzen a, b, c, a', b', c' gilt eine geometrische Beziehung analog zu den oben angeführten Gleichungen, nämlich:

$$a = \sqrt{(x2 - xA)^2 + (y2 - yA)^2} - \sqrt{(x1 - xA)^2 + (y1 - yA)^2}$$

$$b = \sqrt{(x2 - xB)^2 + (y2 - yB)^2} - \sqrt{(x1 - xB)^2 + (y1 - yB)^2}$$

$$c = \sqrt{(x2 - xC)^2 + (y2 - yC)^2} - \sqrt{(x1 - xC)^2 + (y1 - yC)^2}$$

$$a' = \sqrt{(x3 - xA)2 + (y3 - yA)^2} - \sqrt{(x2 - xA)^2 + (y2 - yA)^2}$$

$$b' = \sqrt{(x3 - xB)^2 + (y3 - yB)^2} - \sqrt{(x2 - xB)^2 + (y2 - yB)^2}$$

$$c' = \sqrt{(x3 - xC)^2 + (y3 - yC)^2} - \sqrt{(x2 - xC)^2 + (y2 - yC)^2}$$

Anstelle einer oder mehrerer der Differenz a', b', c' der Entfernungen der Betriebsorte P2, P3 von den Funksendern A, B, c oder anstelle einer oder mehrerer der Differenzen a, b, c der Entfernungen der Betriebsorte P1, P2 von den Funksendern A, B, C können alternativ eine oder mehrere der Differenzen a", b", c" der Entfernungen der Betriebsorte P1, P3 von den Funksendern A, B, C in Ansatz gebracht werden. Nur redundante Gleichungen dürfen in dem Gleichungssystem nicht verwendet werden, etwa alle drei Gleichungen für a, a' und a", die die redundante Information beinhalten, daß a + a' = a" ist.

Ein Gleichungssystem von sechs voneinander unabhängigen Gleichungen liefert dann als Lösung die sechs gesuchten Koordinaten (x1, y1), (x2, y2) bzw. (x3, y3). Dies ist ganz allgemein die zielführende Vorgehensweise: die Ermittlung so vieler Referenzdaten, daß ein eindeutig lösbares Gleichungssystem für die zugrunde gelegte Anzahl gesuchter Betriebsort-Koordinaten aufgestellt werden kann.

Vor dem Hintergrund dieses Konzepts zeigt Fig.4 - in Verbindung mit dem Flußdiagramm gemäß Fig.5 - ein Schema zur Bestimmung zweier Betriebsorte P1, P2 einer Funkempfangseinrichtung unter Bezugnahme auf drei Funksender A, B, C und den Abstand zwischen den Meßpunkten/Betriebsorten P1, P2. Eine Auswertung von nur drei Funksendern A, B, C genügt auch bei Zugrundelegung von nur zwei Betriebsorten P1, P2, wenn man Messungen an der Strecke zwischen den beiden Betriebsorten P1, P2 durchführt, um den Abstand zwischen den Betriebsorten zu ermitteln.

Wenn der mobile Funkempfänger in Verbindung mit einem Fahrzeug gebraucht wird, kann der Abstand zwischen zwei Betriebsorten P1, P2 mittels vom Fahrzeug selbst gelieferter Daten ermittelt werden. Bei einer Bewegung des Fahrzeugs vom ersten Betriebsort P1 zum zweiten Betriebsort P2 kann deren räumlicher Abstand beispielsweise ermittelt werden durch Addition von Fahrstreckenvektoren, die durch Geradenabschnitte und deren gegenseitige Relativwinkel definiert sind. Der Betrag des resultierenden Summenvektors ist gleich dem gesuchten Abstand.

Die Relativwinkel zwischen den zurückgelegten Geradenabschnitten können z.B. durch Abtasten der Lenkung oder, wie in Fig.5 angedeutet, durch Radimpulsgeber erfaßt werden, die die bei Kurvenfahrten unterschiedlichen Umdrehungen zweier Räder einer Achse erkennen lassen. Die Zahl der Umdrehungen liefert auch die erforderliche Aussage über die Länge der jeweils betrachteten Geradenabschnitte. Solche Radimpulsgeber sind z.B. in Fahrzeugen mit automatischem Antiblockiersystem (ABS) ohnehin bereits vorhanden, und ihre Signale können zusätzlich für eine vektorielle Fahrstreckenerfassung genutzt werden.

Ein zusätzlicher Sensoraufwand entsteht somit nicht.

Mit dem erfaßten Abstand L12 zwischen den Betriebsorten P1 und P2 läßt sich nun wieder aus geometrischen Beziehungen ein lösbares Gleichungssystem für die vier zunächst unbekannten Koordinaten x1, y1, x2, y2 aufstellen:

$$a = \sqrt{(x2 - xA)^2 + (y2 - yA)^2} - \sqrt{(x1 - xA)^2 + (y1 - yA)^2}$$

$$b = \sqrt{(x2 - xB)^2 + (y2 - yB)^2} - \sqrt{(x1 - xB)^2 + (y1 - yB)^2}$$

$$c = \sqrt{(x2 - xC)^2 + (y2 - yC)^2} - \sqrt{(x1 - xC)^2 + (y1 - yC)^2}$$

$$L12 = \sqrt{(x2 - x1)^2 + (y2 - y1)^2}$$

Ermittelt man zusätzlich zur Länge noch die geographische Absolutrichtung der geraden Verbindungslinie L12 zwischen den zwei Betriebsorten P1, P2, d.h. z.B. den zwischen der Verbindungslinie L12 und der x-Achse des Koordinatensystems eingeschlossenen Winkel $\alpha$, dann genügt sogar die Auswertung nur zweier Funksender A, B zur Aufstellung eines eindeutig lösbaren Gleichungssystems:

$$a = \sqrt{(x2 - x)^2 + (y2 - yA)^2} - \sqrt{(x1 - xA)^2 + (y1 - yA)^2}$$

$$b = \sqrt{(x2 - xB)^2 + (y2 - yB)^2} - \sqrt{(x1 - xB)^2 + (y1 - yB)^2}$$

$$L12 = \sqrt{(x2 - x1)^2 + (y2 - y1)^2}$$

$$(y2 - y1) = (x2 - x1) \cdot \tan \alpha$$

Die Absolutrichtung der geraden Verbindungslinie L12 zwischen dem ersten und zweiten Betriebsort P1, P2 kann etwa mittels eines Kompasses im Zusammenhang mit der genannten Vektorenaddition als resultierende Richtung ermittelt werden.

Fig.6 veranschaulicht einer Methode, bei der bereits zwischen Anfangspunkt P1 und Endpunkt P2 einer Meßstrecke sukzessive an Zwischenpunkten P3, P5, P7, P9 neue Messungen in Gang gesetzt werden, damit nach dem Durchfahren einer ersten Mindeststrecke, z.B. einer 5 km langen Strecke zwischen den Betriebsorten P1 und P2, sukzessive in entsprechend kürzeren Intervallen von z.B. 1 km an den weiteren Betriebsorten P4, P6, P8, P10 laufend bereits fertige Ortungsergebnisse zur Verfügung stehen. Mit Hilfe geeigneter Methoden (Plausibilitäts- oder Trackingverfahren, Mittelungen, Calmanfilter) können die nacheinander berechneten Positionen auch verglichen und erforderlichenfalls korrigiert werden.

Wenn in der vorhergehenden Beschreibung von einer Auswertung der Signale von zwei, drei oder vier Funksendern die Rede ist, so kann die Funkempfangseinrichtung dennoch jeweils mehr als die genannte Anzahl von Sendern beobachten und hieraus die momentan geeignetsten auswählen bzw. Sender mit momentan unbrauchbaren - etwa verrauschten, schwankenden oder sich überlagerten - Signalen von der Auswertung ausschließen.

Zwischen sequentiellen Zeitmarken (wiederkehrenden Impulsfolgen eines bestimmten Kanals) plötzlich auftretende Zeitsprünge können, wenn sie groß genug sind, detektiert, auf Funkfeldanomalien (Beugung, Reflexion etc.) zurückgeführt und evtl. in Verbindung mit parallel auftretenden Feldstärkeänderungen in die Berechnung der Standort-Koordinaten x1, y1, x2, y2 kompensierend eingeführt werden.

Zum Beispiel wird beim Datenübertragungs-Standard des D-Netzes in jedem Zeitschlitz neben der Sprachinformation eine bestimmte Testsequenz übertragen. Aus einem Vergleich der Testsequenz mit dem zu dieser Testsequenz gehörenden Empfangssignal berechnet der Empfänger für jeden Zeitschlitz die Übertragungsbedingungen. Aus der Kenntnis der Übertragungsbedingungen des Empfangssignals wird die tatsächlich gesendete Bitfolge rekonstruiert. Entsprechend kann für den vorliegenden Zusammenhang einer Laufzeitendifferenz-Messung aus einer Dehnung oder Stauchung der Testsequenz auf das Vorhandensein und Ausmaß eines Zeitsprungs geschlossen werden, wie er sich bei wechselndem Mehrwege-Empfang (nach Reflexionen und/oder Beugungen) ergeben kann. Diese Kenntnisse können dann bei der Laufzeitendifferenz-Messung kompensierend berücksichtigt werden.

**Patentansprüche**

1. Verfahren zum funkempfangsseitigen Bestimmen der Ortsveränderung eines Kraftfahrzeugs, wobei eine Funkempfangseinrichtung des Kraftfahrzeugs eine Folge von Funksignalen (S0, S1,..., Sn) empfängt, die mit gleichbleibendem zeitlichen Abstand (T) von einem ersten stationären Funksender (A) ausgesendet werden, dadurch gekennzeichnet, daß an einem ersten Betriebsort (P1) der Funkempfangseinrichtung eine Zeitmessung gestartet wird und nach Bewegen der Funkempfangseinrichtung an einen zweiten Betriebsort (P2) die Differenz ($\delta t$) der von einem Funksignal für den Weg vom Funksender (A) zum ersten (P1) und zweiten (P2) Betriebsort benötigten Laufzeiten ermittelt wird.

2. Verfahren nach Anspruch 1, dadurch gekennzeichnet, daß am ersten Betriebsort (P1) der Funkempfangseinrichtung zu einem Zeitpunkt (to) des Empfangs eines nullten Funksignals (S0) aus der Folge äquidistanter Funksignale (S0, S1,..., Sn) die Zeitmessung gestartet wird und nach Bewegen der Funkempfangseinrichtung an den zweiten Betriebsort (P2) zu einem Zeitpunkt (tn) des Empfangs eines n-ten Funksignals (Sn) aus der Folge äquidistanter Funksignale (S0, S1,..., Sn) die Differenz ($\delta t$) aus der seit Empfang des nullten Funksignals (S0) verstrichenen Zeit (tn - to) und dem n-Fachen (nT) des zwischen aufeinanderfolgenden Funksignalen (S0, S1,..., Sn) bestehenden zeitlichen Abstands (T) gebildet wird.

3. Verfahren nach Anspruch 1 oder 2, dadurch gekennzeichnet, daß aus der Laufzeitendifferenz ($\delta t$) bei bekannter Ausbreitungsgeschwindigkeit der Funksignale (S0, S1,..., Sn) eine Differenz (a) der Abstände der Betriebsorte (P1, P2) vom Funksender (A) ermittelt wird.

4. Verfahren nach Anspruch 1, 2 oder 3, dadurch gekennzeichnet, daß weitere Referenzdaten gewonnen werden, die zusammen mit der bezüglich des ersten Funksenders (A) ermittelten Laufzeitendifferenz ($\delta t$) oder Abstandsdifferenz (a) eine Bestimmung der Koordinaten (x1, y1) des ersten Betriebsorts (P1) und/oder der Koordinaten (x2, y2) des zweiten Betriebsorts (P2) gestatten.

5. Verfahren nach Anspruch 4, dadurch gekennzeichnet, daß folgende weiteren Referenzdaten ermittelt werden: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C) und eine zwischen dem ersten (P1) und zweiten (P2) Betriebsort bestehende Laufzeit- oder Abstandsdifferenz (d) bezüglich eines vierten stationären Funksenders (D).

6. Verfahren nach Anspruch 4, dadurch gekennzeichnet, daß die Funkempfangseinrichtung vom zweiten Betriebsort (P2) zu einem dritten Betriebsort (P3) bewegt wird und folgende weiteren Referenzdaten ermittelt werden: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C), eine zwischen dem zweiten (P2) und dritten (P3) Betriebsort bestehende Laufzeit- oder Abstandsdifferenz (a') bezüglich des ersten stationären Funksenders (A), eine zwischen dem zweiten (P2) und dritten (P3) Betriebsort bestehende Laufzeit- oder Abstandsdifferenz (b') bezüglich des zweiten stationären Funksenders (B) und eine zwischen dem zweiten (P2) und dritten (P3) Betriebsort bestehende Laufzeit- oder Abstandsdifferenz (c') bezüglich des dritten stationären Funksenders (C).

7. Verfahren nach Anspruch 4, dadurch gekennzeichnet, daß folgende weiteren Referenzdaten ermittelt werden: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C) und der räumliche Abstand (L12) zwischen dem ersten (P1) und dem zweiten (P2) Betriebsort.

8. Verfahren nach Anspruch 4, dadurch gekennzeichnet, daß folgende weiteren Referenzdaten ermittelt werden: eine zwischen dem ersten (P1) und zweiten (P2) Betriebsort bestehende Laufzeit- oder Abstandsdifferenz (b) bezüglich eines zweiten stationären Funksenders (B), der räumliche Abstand (L12) zwischen dem ersten (P1) und dem zweiten (P2) Betriebsort und die Absolutrichtung ($\alpha$) der geraden Verbindungslinie (L12) zwischen dem ersten (P1) und dem zweiten (P2) Betriebsort bezüglich des Koordinatensystems (x, y), in dem die Betriebsorte (P1, P2) definiert werden.

9. Verfahren nach Anspruch 7 oder 8, dadurch gekennzeichnet, daß bei der Bewegung vom ersten Betriebsort (P1) zum zweiten Betriebsort (P2) deren räumlicher Abstand (L12) ermittelt wird durch Addition von Fahrstreckenvektoren, die durch Geradenabschnitte und deren gegenseitige Relativwinkel definiert werden.

10. Verfahren nach Anspruch 9, dadurch gekennzeichnet, daß die Relativwinkel zwischen den Geradenabschnitten durch Abtasten der Lenkung oder der unterschiedlichen Umdrehungen zweier Räder einer Achse des Kraftfahrzeugs erfaßt wird.

11. Verfahren nach Anspruch 8, 9 oder 10, dadurch gekennzeichnet, daß die Absolutrichtung ($\alpha$) der Verbindungslinie (L12) zwischen dem ersten (P1) und dem zweiten (P2) Betriebsort mittels eines Kompasses ermittelt wird.

12. Verfahren nach einem der Ansprüche 5 bis 11, dadurch gekennzeichnet, daß der Abstand zwischen dem ersten (P1) und zweiten (P2) Betriebsort bzw. zwischen dem zweiten (P2) und dritten (P3) Betriebsort so gewählt wird, daß er zwischen 2 und 20 %, vorzugsweise etwa 10 %, des Abstands zwischen zwei stationären Funksendern (A, B, C, D) beträgt.

13. Verfahren nach einem der vorhergehenden Ansprüche, dadurch gekennzeichnet, daß bei der Bewegung der Funkempfangseinrichtung von einem Betriebsort (P1) zu einem nächsten Betriebsort (P2) bereits nach Zurücklegen einer Teilstrecke eine weitere Zeitmessung gestartet wird oder bei Zurücklegen mehrerer Teilstrecken sukzessive jeweils eine weitere Zeitmessung gestartet wird.

14. Verfahren nach einem der vorhergehenden Ansprüche, dadurch gekennzeichnet, daß die Funkempfangseinrichtung äquidistante Taktsignale eines digital übertragenen Funksignals, insbesondere taktgesteuerte Rufsignale oder Organisationssignale eines Funksenders (A, B, C, D) für Autotelefon-Kommunikation, auswertet.

15. Verfahren nach einem der vorhergehenden Ansprüche, dadurch gekennzeichnet, daß Zeitsprünge, die sich zwischen zwei normalerweise in gegebenem Abstand (T) aufeinanderfolgenden Funksignalen ereignen, evtl. in Verbindung mit parallel auftretenden Feldstärkeänderungen erfaßt werden und in die Bestimmung der Koordinaten (x1,y1; x2,y2; x3,y3) der Betriebsorte (P1, P2, P3) eingeführt werden.

16. Funkempfangseinrichtung eines Kraftfahrzeugs, eingerichtet zum Empfang einer Folge von Funksignalen (S0, S1,..., Sn), die mit gleichbleibendem zeitlichen Abstand (T) von einem ersten stationären Funksender (A) ausgesendet werden, gekennzeichnet durch eine Einrichtung zum Starten einer Zeitmessung an einem ersten Betriebsort (P1) der Funkempfangseinrichtung und zum Ermitteln der Differenz ($\delta t$) der von einem Funksignal für den Weg vom Funksender (A) zum ersten (P1) und einem zweiten (P2) Betriebsort benötigten Laufzeiten nach Bewegen der Funkempfangseinrichtung an den zweiten Betriebsort (P2).

17. Funkempfangseinrichtung nach Anspruch 16, dadurch gekennzeichnet, daß sie ausgebildet ist, die Zeitmessung am ersten Betriebsort (P1) zu einem Zeitpunkt (to) des Empfangs eines nullten Funksignals (S0) aus der Folge äquidistanter Funksignale (S0, S1,..., Sn) zu starten und nach Bewegen der Funkempfangseinrichtung an den zweiten Betriebsort (P2) zu einem Zeitpunkt (tn) des Empfangs eines n-ten Funksignals (Sn) aus der Folge äquidistanter Funksignale (S0, S1,..., Sn) die Differenz ($\delta t$) aus der seit Empfang des nullten Funksignals (S0) verstrichenen Zeit (tn - to) und dem n-Fachen (nT) des zwischen aufeinanderfolgenden Funksignalen (S0, S1,..., Sn) bestehenden zeitlichen Abstands (T) zu

EP 0 437 822 A2

bilden.

18. Funkempfangseinrichtung nach Anspruch 16 oder 17, dadurch gekennzeichnet, daß sie ausgebildet ist, aus der Laufzeitendifferenz ($\delta t$) bei bekannter Ausbreitungsgeschwindigkeit der Funksignale (S0, S1,..., Sn) eine Differenz (a) der Abstände der Betriebsorte (P1, P2) vom Funksender (A) zu ermitteln.

19. Funkempfangseinrichtung nach Anspruch 16, 17 oder 18, dadurch gekennzeichnet, daß sie ausgebildet ist, weitere Referenzdaten zu gewinnen und auszuwerten, die zusammen mit der bezüglich des ersten Funksenders (A) ermittelten Laufzeitendifferenz ($\delta t$) oder Abstandsdifferenz (a) eine Bestimmung der Koordinaten (x1, y1) des ersten Betriebsorts (P1) und/oder der Koordinaten (x2, y2) des zweiten Betriebsorts (PZ) gestatten.

20. Funkempfangseinrichtung nach Anspruch 19, dadurch gekennzeichnet, daß sie ausgebildet ist, folgende weiteren Referenzdaten zu ermitteln: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C) und eine zwischen dem ersten (P1) und zweiten (P2) Betriebsort bestehende Laufzeit- oder Abstandsdifferenz (d) bezüglich eines vierten stationären Funksenders (D).

21. Funkempfangseinrichtung nach Anspruch 19, dadurch gekennzeichnet, daß sie vom zweiten Betriebsort (P2) zu einem dritten Betriebsort (P3) bewegbar ist und ausgebildet ist, folgende weiteren Referenzdaten zu ermitteln: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C), eine zwischen dem zweiten (P2) und dritten (P3) Betriebsort bestehende Laufzeit- oder Abstandsdifferenz (a') bezüglich des ersten stationären Funksenders (A), eine zwischen dem zweiten (P2) und dritten (P3) Betriebsort bestehende Laufzeit- oder Abstandsdifferenz (b') bezüglich des zweiten stationären Funksenders (B) und eine zwischen dem zweiten (P2) und dritten (P3) Betriebsort bestehende Laufzeit- oder Abstandsdifferenz (c') bezüglich des dritten stationären Funksenders (C).

22. Funkempfangseinrichtung nach Anspruch 19, dadurch gekennzeichnet, daß sie ausgebildet ist, folgende weiteren Referenzdaten zu ermitteln: eine zwischen dem ersten (P1) und zweiten (P2) Betriebsort bestehende Laufzeit- oder Abstandsdifferenz (b) bezüglich eines zweiten stationären Funksenders (B), eine zwischen dem ersten (P1) und zweiten (P2) Betriebsort bestehende Laufzeit- oder Abstandsdifferenz (c) bezüglich eines dritten stationären Funksenders (C) und der räumliche Abstand (L12) zwischen dem ersten (P1) und dem zweiten (P2) Betriebsort.

23. Funkempfangseinrichtung nach Anspruch 19, dadurch gekennzeichnet, daß sie ausgebildet ist, folgende weiteren Referenzdaten zu ermitteln: eine zwischen dem ersten (P1) und zweiten (P2) Betriebsort bestehende Laufzeit- oder Abstandsdifferenz (b) bezüglich eines zweiten stationären Funksenders (B), den räumliche Abstand (L12) zwischen dem ersten (P1) und dem zweiten (P2) Betriebsort und die Absolutrichtung ($\alpha$) der Verbindungslinie (L12) zwischen dem ersten (P1) und dem zweiten (P2) Betriebsort bezüglich des Koordinatensystems (x, y), in dem die Betriebsorte (P1, P2) definiert sind.

24. Funkempfangseinrichtung nach Anspruch 22 oder 23, gekennzeichnet durch eine Vorrichtung zum Ermitteln des räumlichen Abstands (L12) zwischen dem ersten Betriebsort (P1) und dem zweiten Betriebsort (P2) bei der Bewegung vom ersten Betriebsort (P1) zum zweiten Betriebsort (P2) durch Addition von Fahrstreckenvektoren, die durch Geradenabschnitte und deren gegenseitige Relativwinkel definiert sind.

25. Funkempfangseinrichtung nach Anspruch 24, dadurch gekennzeichnet, daß die Relativwinkel zwischen den Geradenabschnitten durch Abtasten der Lenkung oder der unterschiedlichen Umdrehungen zweier Räder einer Achse des Kraftfahrzeugs erfaßbar sind.

26. Funkempfangseinrichtung nach Anspruch 23, 24 oder 25, dadurch gekennzeichnet, daß die Absolutrichtung ($\alpha$) der Verbindungslinie (L12) zwischen dem ersten (P1) und dem zweiten (P2) Betriebsort mittels eines Kompasses ermittelbar ist.

27. Funkempfangseinrichtung nach einem der Ansprüche 20 bis 26, dadurch gekennzeichnet, daß sie eingerichtet ist, in einem Abstand, der zwischen 2 und 20 %, vorzugsweise etwa 10 %, des Abstands zwischen zwei stationären Funksendern (A, B, C, D) beträgt, nach einem Betriebsort (P1; P2) einen nächsten Betriebsort (P2; P3) zu wählen.

28. Funkempfangseinrichtung nach einem der Ansprüche 16 bis 27, dadurch gekennzeichnet, daß sie eingerichtet ist, bei ihrer Bewegung von einem Betriebsort (P1) zu einem nächsten Betriebsort (P2) bereits nach Zurücklegen einer Teilstrecke eine weitere Zeitmessung zu starten oder bei Zurücklegen mehrerer Teilstrecken sukzessive jeweils eine weitere Zeitmessung zu starten.

29. Funkempfangseinrichtung nach einem der Ansprüche 16 bis 28, dadurch gekennzeichnet, daß sie zur Auswertung äquidistanter Taktsignale eines digital übertragenen Funksignals, insbesondere taktgesteuerter Rufsignale oder Organisationssignale eines Funksenders (A, B, C, D) für Autotelefon-Kommunikation, ausgebildet ist.

30. Funkempfangseinrichtung nach einem der Ansprüche 16 bis 29, dadurch gekennzeichnet, daß sie eingerichtet ist, Zeitsprünge, die sich zwischen zwei normalerweise äquidistanten Funksignalen ereignen, evtl. in Verbindung mit parallel auftretenden Feldstärkeänderungen zu erfassen und in die Bestimmung der Koordinaten (x1,y1; x2,y2; x3,y3) der Betriebsorte (P1, P2, P3) einzuführen.

31. Funkempfangseinrichtung nach einem der Ansprüche 16 bis 30, dadurch gekennzeichnet, daß in ihr die Koordinaten (xA, yA; xB, yB; xC, yC; xD, yD) einer Mehrzahl von Funksendern (A; B; C; D) eingespeichert sind.

Fig. 1

Fig. 2

Fig. 3

Fig. 4

Fig. 6

Fahrtrichtung

*Fig. 5*

Radimpulsgeber

Auswerten der Radimpulse:
Summen- und Differenzenbildung

Berechnen der geradlinigen
Referenzstrecke $\Delta$P zwischen
P1 und P2

Speicher für Basisstationsdaten:
- Namen
- Koordinaten

Ortungsberechnung, evtl.
Filterung und Plausibilitätsprüfung

Telefon

Messung der Laufzeitdifferenzen
zu drei Basisstationen zwischen
P1 und P2 der Referenzstrecke